# EUROPÄISCHE PATENTSCHRIFT

(11) **EP 0 915 278 B1**
(45) Veröffentlichungstag und Bekanntmachung des Hinweises auf die Patenterteilung: **01.10.2003**
(21) Anmeldenummer: 98120761.6
(22) Anmeldetag: 02.11.1998
(51) Int. Cl.: F16K 39/02, E03D 1/34, E03D 3/02

(54) **Ventildichtungsanordnung**
Valve closure device
Dispositif de fermeture de vanne

(30) Priorität: 04.11.1997 DE 19748620
(43) Veröffentlichungstag der Anmeldung: 12.05.1999
(73) Patentinhaber: GROHEDAL GmbH & Co.KG, 32457 Porta Westfalica (DE)
(72) Erfinder: Korte, Hermann, 32545 Bad Oeynhausen (DE)
(74) Vertreter: Ziegler, Thomas, Dr.

(56) Entgegenhaltungen:
- EP-A- 0 038 782
- DE-A- 1 914 064
- DE-A- 2 852 006
- FR-A- 1 337 725
- FR-A- 2 343 092
- FR-A- 2 343 181
- FR-A- 2 435 650
- US-A- 3 873 063

## Beschreibung

Die Erfindung betrifft eine Ventildichtungsanordnung, insbesondere für ein Spülkastenablaufventil oder ein Selbstschlußventil, mit einem Verschlußglied, an dem radial vorstehend ein ringförmiges Dichtelement in einer Ringnut gehalten ist, welches andererseits an einem im Durchmesser größeren Ventilsitz in der Absperrposition zur Anlage gelangt.

Derartige Ventildichtungsanordnungen sind bekannt (siehe z.B. die Patentschrifte DE-A-1 914 064 und FR-A-2 343 092). Hierbei hat sich insbesondere bei Spülkastenablaufventilen gezeigt, daß die auf der Ringfläche des Ventilverschlußglieds wirkende Wassersäule eine unerwünscht hohe Krafteinlenkung bei der Öffnung des Ablaufventils erfordert. Auch bei Selbstschlußventilen mit einer Druckkammer für ein Hauptventilverschlußglied, wobei zur Steuerung des Hauptventilverschlußglieds ein stangenförmiges vom Benutzer zu betätigendes Entlastungsventil eingesetzt ist, kann es zu einer unerwünschten Schwergängigkeit des Entlastungsventils kommen, wenn das stangenförmige Entlastungsventil gleichzeitig die Betätigungseinrichtung für das Selbstschlußventil trägt und entsprechend große Abmessungen aufweisen muß.

Der Erfindung liegt daher die Aufgabe zugrunde, eine gattungsgemäße Ventildichtungsanordnung zu schaffen, mit der die für eine Ventilbetätigung erforderliche Krafteinleitung verringert werden kann.

Diese Aufgabe wird erfindungsgemäß dadurch gelöst, daß im Bereich der Ringnut ein Überströmkanal oder mehrere Überströmkanäle ausgebildet ist bzw. sind und das Dichtelement axial geringfügig beweglich zur Dichtkante am Verschlußglied gehalten ist, wobei stromabwärts hinter dem Dichtelement ein Drosselkanal oder mehrere Drosselkanäle ausgebildet ist bzw. sind, dessen oder deren Gesamtströmungsquerschnitt kleiner als der des Überströmkanals oder der Überströmkanäle ist.
Weitere Ausgestaltungen der Erfindung sind in den Ansprüchen 2 bis 4 angegeben.

Ausführungsbeispiele der Erfindung sind in der Zeichnung dargestellt und werden im folgenden näher beschrieben. Es zeigt
- Fig. 1: ein teilweise dargestelltes Spülkastenablaufventil im Längsschnitt, wobei in der linken Bildhälfte das Ventil in Absperrstellung, in der rechten Bildhälfte das Ventil am Beginn des Öffnungsvorgangs dargestellt ist;
- Fig. 2: ein Entlastungsventil für ein Selbstschlußventil im Längsschnitt, wobei in der linken Hälfte das Entlastungsventil in der Schließstellung, in der rechten Bildhälfte der Beginn der Öffnungsstellung dargestellt ist.

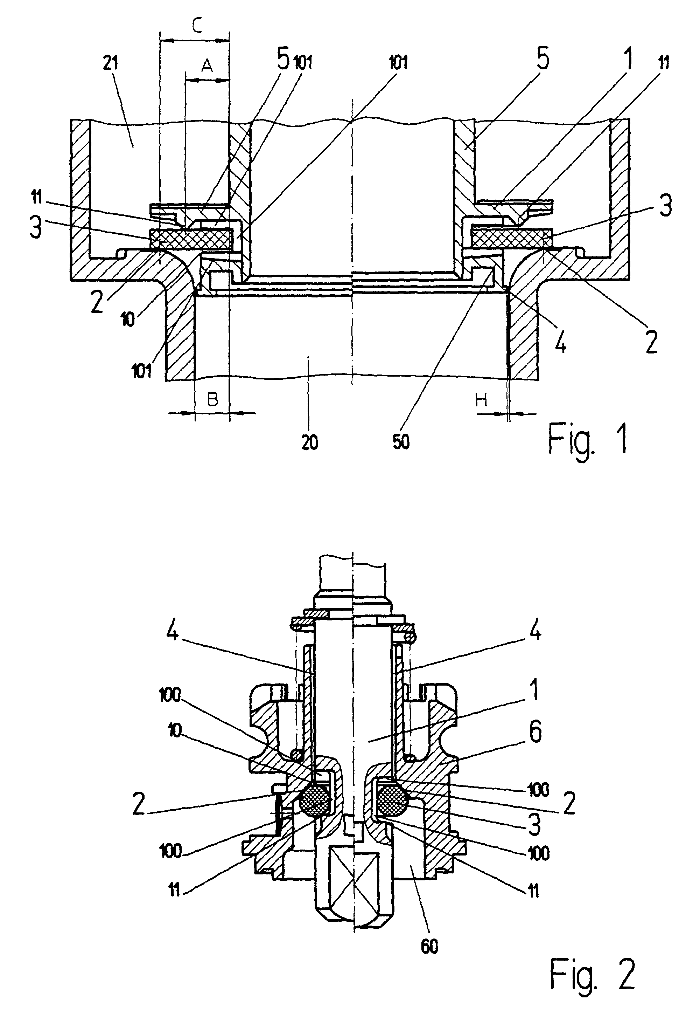

Der Einfachheit halber sind bei den Ausführungsbeispielen in der Zeichnung gleiche oder entsprechende Elemente mit jeweils gleichen Bezugszeichen versehen.
Bei dem in Fig. 1 gezeigten Spülkastenablaufventil ist ein wulstförmig umlaufender Ventilsitz 2 vorgesehen, an dem ein als Flachring ausgebildetes Dichtelement 3 aus Elastomer in der Schließstellung anliegt. Das Dichtelement 3 stützt sich hierbei an der Rückseite an einem an einem Überlaufrohr 5 ausgebildeten Ventilverschlußglied 1 an einer umlaufenden Dichtkante 11 ab. In dem Ventilverschlußglied 1 ist eine umlaufende Ringnut 10 ausgebildet, von der das ringförmige Element 3 an dem Innenbereich geringförmig verschieblich aufgenommen ist. In der Ringnut 10 sind entsprechend dem U-Profil der Ringnut Rippen 101 ausgebildet, die etwa symmetrisch angeordnete Überströmkanäle 100 begrenzen. Am stromabwärts gelegenen Ende des Überlaufrohrs 5 ist im Bereich des Ventilverschlußglieds 1 ein Ringfortsatz 50 vorgesehen, so daß eine relativ einfache Herstellung der Ringnut 10 mit den Rippen 101 im Spritzgießverfahren erfolgen kann. Der Ringfortsatz 50 wird separat hergestellt und abschließend auf das Überlaufrohr aufgebracht, wobei er beispielsweise angeschweißt, angeklebt oder aufgeschraubt werden kann. Der stromabwärts gelegene Endbereich des Ringfortsatzes 50 bildet außerdem mit der Wandung der Auslaßöffnung 20 des Ventilsitzes 2 einen ringförmigen Drosselkanal 4. Der Querschnitt des Drosselkanals 4 ist dabei kleiner ausgelegt als der Querschnitt der Überströmkanäle 100.

Das vorstehend beschriebene Spülkastenablaufventil hat folgende Funktionsweise:
In der linken Bildhälfte befindet sich das Ablaufventil in der Schließstellung. Das Dichtelement 3 liegt hierbei auf dem ringförmigen Ventilsitz 2 abdichtend auf. An der gegenüberliegenden Seite des Dichtelements 3 liegt die als umlaufender Wulst ausgebildete Dichtkante 11 an dem Dichtelement 3 an, so daß ein Wasserdurchtritt von einem Ringraum 21 im Spülkasten in die Auslaßöffnung 20 verhindert ist. Hierbei wirkt eine geringförmige Wassersäule mit der Dicke A auf das Verschlußglied 1 1 ein, während auf das Dichtelement 3 eine Ringwassersäule mit der Dicke C einwirkt.
Wird nun vom Benutzer das Überlaufrohr 5 angehoben, so wird zunächst lediglich das Ventilverschlußglied 1 von dem Dichtelement 3 abgehoben, so daß das Wasser im Bereich der Dichtkante in die Überströmkanäle 100 einströmt und an dem im Querschnitt kleiner gehaltenen Drosselkanal 4 in die Auslaßöffnung 20 austritt. Hierbei bildet sich ein ringförmig ausgebildeter Staudruck, so daß im wesentlichen lediglich nur noch die ringförmige Wassersäule mit der Dicke B am weiteren Öffnungsvorgäng angehoben werden muß, um das Dichtelement 3 vom Ventilsitz 2 zu lösen und die volle Öffnung des Ablaufventils zu erwirken.
In dem in Fig. 2 gezeigten Ausführungsbeispiel ist ein Druckentlastungsventil eines Selbstschlußventils dargestellt, wobei ein Hauptventilverschlußglied 6 kolbenförmig verschiebbar in einem nicht gezeigten Ventilgehäuse angeordnet ist, das von einer Druckkammer 60 in seine Schließposition gedrückt wird, wobei die Druckkammer 60 über eine Drosseldüse (in der Zeichnung nicht dargestellt) mit dem stromaufwärts vor dem Hauptventil herrschenden Druck beaufschlagt ist. Zur Öffnung des Selbstschlußventils ist hierbei in dem Hauptventilverschlußglied 6 ein stangenförmig ausgebildetes Ventilverschlußglied 1 mit einem O-ringförmigen Dichtelement 3 zur Druckentlastung vorgesehen, welches in der Schließposition an einem kegelförmig ausgebildeten Ventilsitz 2 des Hauptventilverschlußglieds 6 anliegt. Das Dichtelement 3 liegt an der entgegengesetzten Seite an einer Dichtkante 11 des Ventilverschlußglieds 1 an, wobei in dem stangenförmigen Ventilverschlußglied 1 eine Ringnut 10 ausgebildet ist, in der das Dichtelement 3 geringfügig axial verschieblich gehalten ist. An der der Dichtkante 11 gegenüberliegenden Seite und im Grund der Ringnut 10 sind Überströmkanäle 100 ausgebildet. Außerdem sind stromabwärts hinter dem Dichtelement 3 Drosselkanäle 4 ausgebildet. Der Querschnitt der Drosselkanäle 4 wird hierbei von der zylindrischen Mantelfläche des stangenförmigen Verschlußglieds 1 und Axialnuten in der Wandung einer Führungsbohrung im Hauptventilverschlußglied 6 für den stromabwärts gelegenen Endbereich des stangenförmigen Verschlußglieds 1 begrenzt.

Das vorstehend beschriebene Entlastungsventil hat folgende Funktionsweise:
In der linken Bildhälfte ist das Entlastungsventil in der Schließstellung gezeigt, wobei das Dichtelement 3 einerseits an der im Durchmesser größer als das Ventilverschlußglied 1 ausgebildeten Kegelfläche des Ventilsitzes 2 anliegt, während es am Ventilverschlußglied 1 an der Dichtkante 11 anliegt und somit eine Druckentlastung aus der Druckkammer 60 in den Drosselkanal 4 absperrt.

Wird nun vom Benutzer des Ventilverschlußglieds 1 axial in das Hauptventilverschlußglied 6 eingeschoben, wie es in der rechten Bildhälfte gezeigt ist, so verharrt hierbei das Dichtelement an dem Ventilsitz 2, während hierbei die Dichtkante 11 die Überströmkanäle 100 freigibt, wobei nun auf der gegenüberliegenden Seite des Dichtelements 3, verursacht durch die im Querschnitt kleineren Drosselkanäle 4, sich ein Staudruck aufbaut und den weiteren Öffnungsvorgang bzw. das Lösen des Dichtelements 3 vom Ventilsitz 2 unterstützt, so daß insgesamt eine geringere Betätigungskraft vom Benutzer am Öffnungsvorgang einzubringen ist.

## Patentansprüche

1. Ventildichtungsanordnung, insbesondere für ein Spülkastenablaufventil oder ein Selbstschlußventil, mit einem Ventilsitz (2) und mit einem Verschlußglied (1), an dem radial vorstehend ein ringförmiges Dichtelement (3) in einer Ringnut (10) gehalten ist, welches andererseits an dem im Durchmesser größeren Ventilsitz (2) in der Absperrposition zur Anlage gelangt, **dadurch gekennzeichnet, daß** im Bereich der Ringnut (10) ein Überströmkanal oder mehrere Überströmkanäle (100) ausgebildet ist oder sind und das Dichtelement (3) axial geringfügig beweglich zur Dichtkante (11) am Ventilverschlußglied (1) gehalten ist, wobei stromabwärts hinter dem Dichtelement (3) ein Drosselkanal oder mehrere Drosselkanäle (4) ausgebildet ist oder sind, dessen oder deren Gesamtströmungsquerschnitt kleiner als der des Überströmkanals oder der Überströmkanäle (100) ist, und wobei der Durchmesser der Dichtkante (11) an Ventilverschlußglied (1) geringer ist als der Durchmesser des Ventilsitzes (2).

2. Ventildichtungsanordnung nach Anspruch 1, **dadurch gekennzeichnet, daß** das Verschlußglied (1) an einem Überlaufrohr (5) eines Spülkastenablaufventils ausgebildet und als Dichtelement (3) eine Ringscheibe vorgesehen ist, wobei in der Ringnut (10) zur Bildung der Überströmkanäle (100) radial verlaufende U-förmig gebildete Rippen (101) vorgesehen sind, und die Dichtkante (11) von einem umlaufenden Wulst des Verschlußglieds (1) gebildet ist, während der Drosselkanal (4) von einem in einer Auslaßöffnung (20) in der Schließstellung einfassenden Ringfortsatz (50) des Überlaufrohrs (5) gebildet ist.

3. Ventildichtungsanordnung nach Anspruch 2, **dadurch gekennzeichnet, daß** der Ringfortsatz (50) die stromabwärts liegende Seitenwand mit deren Rippen (101) bildet, wobei der Ringfortsatz (50) axial auf das Überlaufrohr (5) aufbring- und befestigbar ist.

4. Ventildichtungsanordnung nach Anspruch 1, **dadurch gekennzeichnet, daß** das Ventilverschlußglied (1) stangenförmig als Druckentlastungsventil für ein Selbstschlußventil ausgebildet ist, wobei die Dichtkante (11), an der der Druckseite zugekehrten Seitenwand der Ringnut (10) vorgesehen ist und die Überströmkanäle (100) im Grund und in der der Druckseite abgekehrten Seite ausgebildet sind, während der Drosselkanal (4) von der zylindrischen Außenseite des stangenförmigen Ventilverschlußglieds (1) und Axialnuten in der Wandung einer Führungsbohrung in einem kolbenförmigen Hauptventilverschlußglied (6) begrenzt ist.

## Claims

1. Valve-sealing arrangement, especially for a cistern outlet valve or a self-closing valve, having a valve seat (2) and a closure member (1) against which an annular sealing element (3) is held in an annular groove (10) so as to project radially, the sealing element in the shut-off position engaging at its other side with the valve seat (2), which has a larger diameter, **characterised in that** in the region of the annular groove (10) a spill channel or a plurality of spill channels (100) is formed and the sealing element (3) is held so that it is axially slightly movable with respect to the sealing edge (11) on the valve-closure member (1), wherein downstream, after the sealing element (3), there is formed a throttle channel or a plurality of throttle channels (4), the total flow cross-section of which is less than that of the spill channel or spill channels (100), and wherein the diameter of the sealing edge (11) on the valve closure member (1) is less than the diameter of the valve seat (2).

2. Valve-sealing arrangement according to claim 1, **characterised in that** the closure member (1) is formed on an overflow pipe (5) of a cistern drain valve and an annular washer is provided as sealing element (3), radially extending U-shaped ribs (101) being provided in the annular groove (10) to form the spill channels (100) and the sealing edge (11) being formed by a circumferential enlargement of the closure member (1), whilst the throttle channel (4) is formed by an annular extension (50) of the overflow pipe (5) engaging in an outlet opening (20) in the closed position.

3. Valve-sealing arrangement according to claim 2, **characterised in that** the annular extension (50) forms the downstream lateral wall with the ribs (101), the annular extension (50) being axially positionable on and securable to the overflow pipe (5).

4. Valve-sealing arrangement according to claim 1, **characterised in that** the valve closure member (1) is constructed in rod form as pressure-relief valve for a self-closing valve, the sealing edge (11) at which the lateral wall, facing the pressure side, of the annular groove (10) is provided, and the spill channels (100) being formed in the base and in the side remote from the pressure side, whilst the throttle channel (4) is defined by the cylindrical outside of the rod-form valve closure member (1) and axial grooves in the wall of a guide bore in a piston-form main valve closure member (6).

## Revendications

1. Disposition de joint de soupape, en particulier pour une soupape d'évacuation de réservoir de chasse d'eau ou une soupape à fermeture automatique, comportant un siège (2) de soupape et un organe (1) de fermeture, sur lequel est maintenu dans une rainure (10) annulaire un élément (3) d'étanchéité en forme d'anneau, dépassant dans le sens radial, qui, de l'autre côté, en position de fermeture, parvient en appui sur le siège (2) de soupape de diamètre plus grand,
**caractérisé en ce que**
dans la zone de la rainure (10) annulaire, un canal de trop-plein ou plusieurs canaux (100) de trop-plein est ou sont formés, et l'élément (3) d'étanchéité est maintenu contre l'organe (1) de fermeture de soupape, légèrement mobile dans le sens axial par rapport à l'arête (11) d'étanchéité, avec, en aval de l'écoulement, derrière l'élément (3) d'étanchéité, un canal d'étranglement ou plusieurs canaux (4) d'étranglement dont la section d'écoulement totale est plus petite que celle du canal de trop-plein ou des canaux (100) de trop-plein, le diamètre de l'arête (11) d'étanchéité sur l'organe (1) de fermeture de soupape étant plus petit que le diamètre du siège (2) de soupape.

2. Disposition de joint de soupape selon la revendication 1,
**caractérisé en ce que**
l'organe (1) de fermeture est constitué sur un tuyau (5) de trop-plein d'une soupape d'évacuation de réservoir de chasse d'eau, et l'élément (3) d'étanchéité est une plaque annulaire, avec dans la rainure (10) annulaire, pour former les canaux (100) de trop-plein, des nervures (101) en forme de U, s'étendant dans le sens radial, et l'arête (11) d'étanchéité est formée par un bourrelet entourant de l'organe (1) de fermeture, alors que le canal (4) d'étranglement est formé par un prolongement (50) annulaire du tuyau (5) de trop-plein pénétrant en position de fermeture dans une ouverture (20) d'évacuation.

3. Disposition de joint de soupape selon la revendication 2,
**caractérisé en ce que**
le prolongement (50) annulaire forme la paroi latérale reposant en aval de l'écoulement avec ses nervures (101), le prolongement (50) annulaire pouvant être monté et fixé dans le sens axial sur le tuyau (5) de trop-plein.

4. Disposition de joint de soupape selon la revendication 1,
**caractérisé en ce que**
l'organe (1) de fermeture de soupape est en forme de tige comme soupape de décharge de pression pour une soupape à fermeture automatique, l'arête (11) d'étanchéité étant prévue sur la paroi latérale de la rainure (10) annulaire tournée du côté de la pression et les canaux (100) de trop-plein étant formés dans le fond et dans le côté opposé à la pression, alors que le canal (4) d'étranglement est limité par le côté extérieur cylindrique de l'organe (1) de fermeture de soupape en forme de tige et par des rainures axiales dans la paroi d'un perçage de guidage réalisé dans un obturateur principal (6) de soupape, en forme de piston.
